Europäisches Patentamt

European Patent Office

Office européen des brevets

(19)

(11) Publication number: **0 355 856**
**A1**

# EUROPEAN PATENT APPLICATION

(21) Application number: **89115827.1**

(22) Date of filing: **28.08.89**

(51) Int. Cl.4: **G06F 13/24 , G06F 13/37**

(30) Priority: **26.08.88 JP 210674/88**

(43) Date of publication of application:
**28.02.90 Bulletin 90/09**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Yoshida, Toshiya**
**Wakutsudai-2-Haitsu 202, 849-1 Shimohideya**
**Okegawa-shi Saitama-ken(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Daisy chain interrupt processing system.**

(57) Interrupt processing units are connected in parallel to a control line for transmitting an interrupt process start signal and a control line for transmitting an interrupt level signal. Therefore, these signals can simultaneously be transmitted from a central processing unit to the respective interrupt processing units. The interrupt processing units simultaneously receive the signals to carry out predetermined processes. As a result, any specific one of the interrupt processing units can transmit its data to the CPU as soon as it receives an acknowledged signal (a daisy chain signal) from the CPU.

FIG.2

EP 0 355 856 A1

## Daisy Chain Interrupt Processing System

## BACKGROUND OF THE INVENTION

### Field of the Invention

The present invention relates to an interrupt processing system, and more particularly to a daisy chain interrupt processing system that can quickly process interrupt requests claimed by a plurality of interrupt processing units.

### Description of the Prior Art

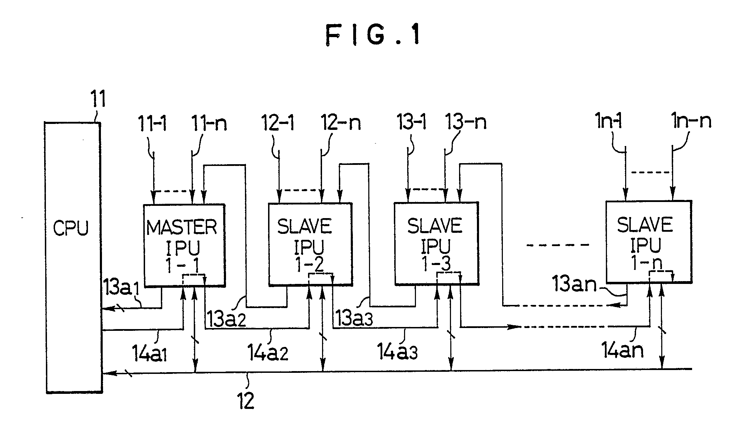

Fig. 1 is a schematic view showing a conventional daisy chain interrupt processing system. In the figure, the numeral 11 represents a central processing unit (CPU) for controlling interrupt processes. The numeral 1-1 represents a master interrupt processing unit (master IPU), and the numerals 1-2 to 1-n represent slave interrupt processing units (slave IPUs).

The master IPU 1-1 and slave IPUs 1-2 to 1-n are connected in series to the CPU 11 with signal lines 13a1 to 13an and control lines 14a1 to 14an. The CPU 11 receives each interrupt request from the master or slave IPUs through the master IPU 1-1 and signal lines, and transmits a daisy chain signal, i.e., an acknowledged signal to the master IPU 1-1 through the control line 14a1.

For example, one of the slave IPUs may send an interrupt request signal to the CPU 11 through the signal lines. Then, the CPU 11 receives the interrupt request signal through the master IPU 1-1 and signal line 13a, and the CPU 11 transmits an acknowledged signal to the master IPU 1-1 through the control line 14a1. The master IPU 1-1 checks to see whether or not the master IPU 1-1 itself has made the interrupt request. If it is confirmed that the master IPU 1-1 is not the one which has made the interrupt request, the master IPU 1-1 transfers the acknowledged signal to the slave IPU 1-2 through the control line 14a2.

Upon receiving the acknowledged signal from an upper slave IPU, each slave IPU checks to see whether or not it has made the interrupt request. If a result of the checking is YES, the slave IPU in question transmits data to the CPU 11 through a data bus 12.

As the number of slave IPUs increases in such a conventional daisy chain interrupt processing system, a waiting time from the transmission of an acknowledged signal of the CPU 11 to the reception of the signal by a target slave IPU extends to critically delay interrupt processes.

For example, it may take a time period of 2t after a certain slave IPU receives an acknowledged signal from its upper slave IPU until the certain slave IPU transfers the acknowledged signal to its lower slave IPU after completing predetermined processes in the certain slave IPU. Therefore, it takes a time period of 2t(n-1) after the CPU 11 receives an interrupt request signal from a slave IPU 1-n and transmits an acknowledged signal until the slave IPU 1-n receives the acknowledged signal. In addition, it takes a time period of 2t after one IPU receives an acknowledged signal until the one IPU transmits data to the CPU 11 through the data bus 12. Therefore, a time period of "2t x n" is needed after the CPU 11 transmits an acknowledged signal until the CPU receives data from a target slave IPU.

Even if a new interrupt request occurs after the completion of processes of one interrupt request, the CPU 11 cannot transmit an acknowledged signal for the new interrupt request until an acknowledged signal for the previous interrupt request is received by the lowermost slave IPU, and, during this period, the CPU is put in an idle state. This may degrade system throughput.

## SUMMARY OF THE INVENTION

An object of the present invention is to provide a daisy chain interrupt processing system that can quickly handle interrupt acknowledging processes.

In order to accomplish the object, the invention provides a daisy chain interrupt processing system comprising a central processing unit (CPU) and master and slave interrupt processing units (IPUs). The IPUs are connected in parallel to the CPU with control lines so that an interrupt process start signal and an interrupt level signal corresponding to an interrupt request claimed by a specific IPU may be transmitted from the CPU to all the IPUs simultaneously. As a result, exchanges between the CPU and IPUs are processed quickly in parallel.

The CPU can simultaneously output an acknowledged signal and a received interrupt level signal, and all the IPUs can simultaneously receive these signals. With this arrangement, an IPU that originated the interrupt request can transmit necessary data to the CPU as soon as it receives an acknowledged signal (a daisy chain signal) from its upper IPU.

In this way, the daisy chain interrupt processing system of the invention can quickly process interrupt requests.

These and other objects, features and advantages of the present invention will be more apparent from the following detailed description of preferred embodiments in conjunction with the accompanying drawings.

## BRIEF DESCRIPTION OF THE DRAWINGS

Fig. 1 is a block diagram showing the arrangement of a daisy chain interrupt processing system according to a prior art.

Fig. 2 is a block diagram showing a daisy chain interrupt processing system according to an embodiment of the invention.

Fig. 3 is a timing chart showing operations of the daisy chain interrupt processing system of Fig. 2.

Fig. 4 is a timing chart showing comparison of the daisy chain interrupt systems of Figs. 1 and 2.

Fig. 5 is a block diagram showing the arrangement of a daisy chain interrupt processing system according to another embodiment of the invention.

## DETAILED DESCRIPTION OF THE EMBODIMENTS

Embodiments of the invention will now be described with reference to the drawings.

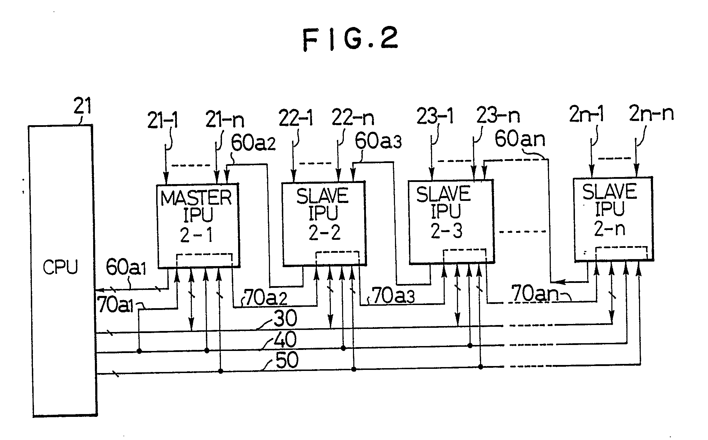

Fig.2 is a block diagram showing an arrangement of a daisy chain interrupt processing system according to an embodiment of the invention.

In the figure, a master interrupt processing unit (master IPU) 2-1 and slave interrupt processing units (slave IPUs) 2-2 to 2-n send data to a central processing unit(CPU) 21 through a data bus 30. The CPU 21 transmits an interrupt process start signal to the IPUs through a control line 40. Also, the CPU 21 transmits an interrupt level signal to the IPUs through a control line 50. The IPUs are connected in parallel to the CPU 21 with the data bus 30 and control lines 40 and 50. The IPUs transmit interrupt request signals to the CPU 21 through signal lines 60a1 to 60an, and the CPU 21 sends an acknowledged signal to the IPUs through signal lines 70a1 to 70an.

External interrupt requests are transmitted to the master IPU 2-1 through input signal lines 21-1 to 21-n. Similarly, external interrupt requests are sent to the slave IPUs through input signal lines 22-1 to 2n-n.

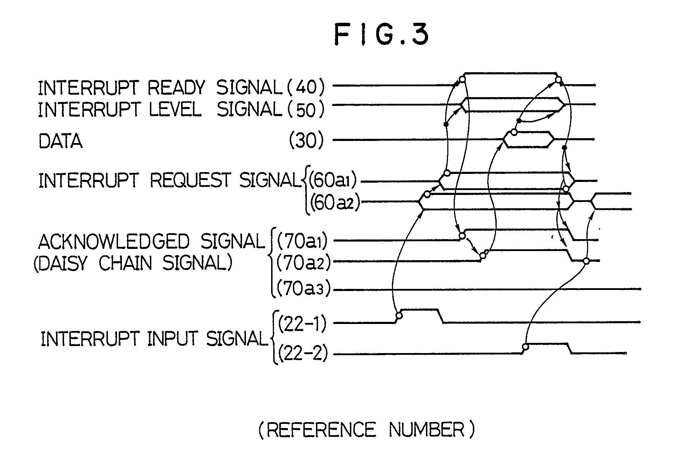

Fig. 3 is a timing chart for explaining operations of the daisy chain interrupt processing system of Fig. 2. Now the operations of the system of the embodiment will be explained with reference to Figs. 2 and 3.

It is supposed that an interrupt request has been made to the slave IPU 2-2 through the input signal line 22-1. The slave IPU 2-2 transmits an interrupt request signal of predetermined level to the master IPU 2-1 through the signal line 60a2. The level of the interrupt request signal corresponds to, for instance, interrupt priority. The master IPU 2-1 transfers the interrupt request signal as it is to the CPU 21 through the signal line 60a1.

Upon receiving the interrupt request signal, the CPU 21 transmits an interrupt process start signal to all the IPUs simultaneously through the control line 40. Further, the CPU 21 transmits an interrupt level signal to all the IPUs through the control line 50. A level of the interrupt level signal is the same as the predetermined level of the interrupt request signal which the CPU 21 has received.

The IPUs are connected in parallel with each other through the control lines 40 and 50 so that all the IPUs may simultaneously receive the interrupt process start signal and interrupt level signal. As soon as receiving the signals, the IPUs judge whether or not each has an interrupt factor, i.e., whether or not each has originated the interrupt request signal. If one IPU has the interrupt factor, the one IPU compares a level of the interrupt level signal with its own level. This operation is done in every IPU at same time irrespective of reception of the acknowledged signal. A result of the comparison is stored in each IPU.

Meanwhile, the interrupt process start signal becomes an acknowledged signal (a daisy chain signal) through the control line 70a1 and is transmitted to the master IPU 2-1. Then, the acknowledged signal is sequentially transferred to the respective slave IPUs through the control lines 70a2 to 70an. Since the master IPU 2-1 has not originated the interrupt request signal, it transfers the acknowledged signal to its lower slave IPU 2-2 through the control line 70a2.

The slave IPU 2-2 is the one that has generated the interrupt request signal, so that the slave IPU 2-2 will not transfer the acknowledged signal to its lower slave IPU. Instead, the slave IPU 2-2 transmits data to the CPU 21 through the data bus 30. Upon receiving the data through the data bus 30, the CPU 21 stops to transmit the signals to the control lines 40 and 50. Then, the slave IPU 2-2 stops to output the data to the data bus 30 to complete the interrupt processes.

According to the system of Fig. 1, the IPUs judge, only after the reception of an acknowledged signal, whether or not each has generated an interrupt request signal. On the other hand, the IPUs of the present invention simultaneously judge, immediately after the reception of an interrupt process start signal, whether or not each has originated an interrupt request signal.

If plural IPUs simultaneously transmit interrupt requests, priority is given to a request from the uppermost IPU, and interrupt requests from lower IPUs fare queued. The priority may be determined according to interrupt level signals.

Bit widths of the signal lines 60a1 to 60an, data bus 30 and control line 50 may be determined depending on amount of required information.

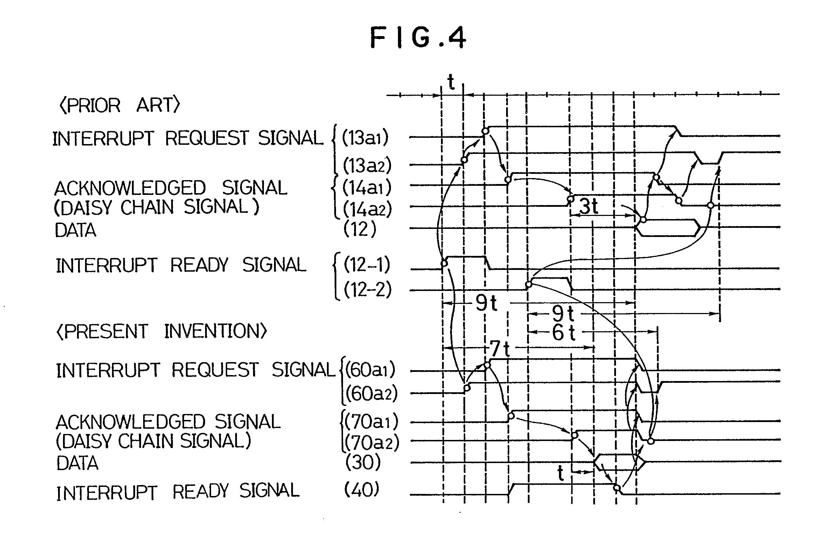

Fig. 4 is a time chart showing comparison of interrupt processing time periods of the daisy chain interrupt processing systems of the prior are and present invention.

As shown in the chart, the conventional system needs a time period of 9t after an interrupt request signal is inputted to the slave IPU 1-2 until the slave IPU 1-2 transmits data to the CPU 11, while the embodiment of the invention needs only a time period of 6t, i.e., two third the time period of the conventional system.

In this way, even if the number of slave IPUs increases, the daisy chain interrupt processing system of the invention can send an acknowledged signal from the CPU to a specific slave IPU within a time period two third a time period needed by the conventional system of Fig. 1.

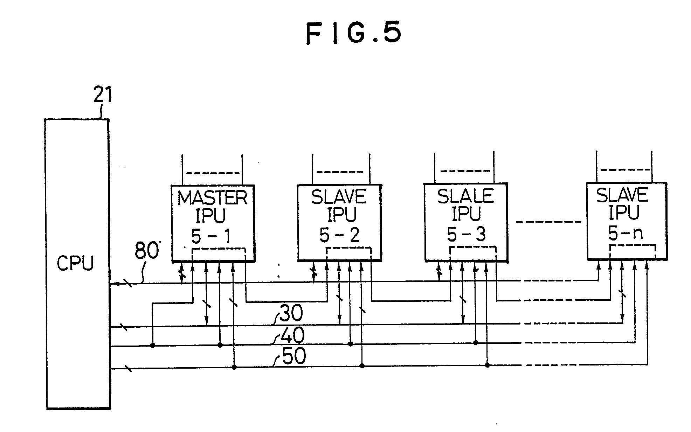

Fig. 5 is a block diagram showing a daisy chain interrupt processing system according to another embodiment of the invention. In this embodiment, IPUs 5-1 to 5-n are connected in parallel to a signal line 80 for transmitting interrupt request signals. Every IPU has a function of always monitoring whether or not the other IPUs are transmitting interrupt request signals. If the other IPUs are transmitting the interrupt request signals, the IPU in question suspends to send its interrupt request signal.

Other parts of the embodiment of Fig. 5 are the same as those of the embodiment of Fig. 2. According to the system of Fig. 5, respective IPUs can transmit their interrupt request signals directly to a CPU 21 through the signal line 80. Therefore, the interrupt request signals can be transmitted to the CPU 21 faster than in the embodiment of Fig. 2, thus completing interrupt processes within a shorter time period.

As described in the above, interrupt processing units (IPUs) of the daisy chain interrupt processing system of the invention are connected in parallel to a control line for sending a process start signal, a control line for sending an interrupt level signal and a data bus. Accordingly, all the IPUs can simultaneously receive the interrupt level signal before an acknowledged signal successively reaches to the respective IPUs. As a result, certain processes such as a level checking process can be done in advance to shorten a time period necessary for achieving interrupt processes.

Various modifications will become possible for those skilled in the art after receiving the teachings of the present disclosure without departing from the scope thereof.

## Claims

1. A daisy chain interrupt processing system comprising:
a central processing unit (CPU) for generally controlling an interrupt acknowledging process;
master interrupt means and a plurality of slave interrupt means;
a control line A for transmitting an interrupt process start signal from said CPU to said interrupt means; and
a control line B for transmitting an interrupt level signal from said CPU to said interrupt means, said interrupt means being connected in parallel to said CPU through said control lines A and B such that all said interrupt means may simultaneously receive the interrupt process start signal and interrupt level signal.

2. A daisy chain interrupt processing system according to claim 1, wherein said interrupt means carry out predetermined processes upon the reception of the interrupt process start signal and interrupt level signal through said control lines A and B such that any specific one of said interrupt means can transmit data to said CPU as soon as the specific interrupt means receives a daisy chain signal from said CPU.

3. A daisy chain interrupt processing system according to claim 1, wherein said interrupt means are connected in parallel to a signal line for transmitting an interrupt request signal from any one of said interrupt means to said CPU, each of said interrupt means having a function of always monitoring whether or not the other interrupt means are sending interrupt requests to said CPU, the transmission of said interrupt requests may be adjusted between the interrupt means.

# F I G . 1

# F I G.2

# F I G . 3

INTERRUPT READY SIGNAL (40)
INTERRUPT LEVEL SIGNAL (50)

DATA (30)

INTERRUPT REQUEST SIGNAL { (60a1)
(60a2)

ACKNOWLEDGED SIGNAL { (70a1)
(DAISY CHAIN SIGNAL) { (70a2)
(70a3)

INTERRUPT INPUT SIGNAL { (22-1)
(22-2)

(REFERENCE NUMBER)

# FIG.4

〈PRIOR ART〉

INTERRUPT REQUEST SIGNAL { (13a1)
                            (13a2)

ACKNOWLEDGED SIGNAL      { (14a1)
(DAISY CHAIN SIGNAL)      (14a2)
DATA                       (12)

INTERRUPT READY SIGNAL  { (12-1)
                          (12-2)

〈PRESENT INVENTION〉

INTERRUPT REQUEST SIGNAL { (60a1)
                           (60a2)

ACKNOWLEDGED SIGNAL      { (70a1)
(DAISY CHAIN SIGNAL)      (70a2)
DATA                       (30)

INTERRUPT READY SIGNAL    (40)

EP 0 355 856 A1

# FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IBM TECHNICAL DISCLOSURE BULLETIN, vol. 25, no. 6, November 1982, pages 3037-3041, New York, US; H.L. KURTZ et al.: "Multilevel, single-line, serial priority poll featuring poll-in, poll-out and poll-capture" * Page 3037, lines 18-27; figure 1; page 3038, lines 11-12; page 3039; page 3040, lines 12-23 * | 1,2 | G 06 F 13/24 G 06 F 13/37 |
| Y | IDEM | 3 | |
| Y | MICROELECTRONICS AND RELIABILITY, vol. 16, no. 4, 1977, pages 281-293, Pergamon Press, Oxford, GB; P. HUGHES et al.: "Multi-processor systems" * Page 282, lines 38-47; page 283, lines 57-64 * | 3 | |
| | | | TECHNICAL FIELDS SEARCHED (Int. Cl.5) |
| | | | G 06 F 13 |

The present search report has been drawn up for all claims

| Place of search | Date of completion of the search | Examiner |
|---|---|---|
| THE HAGUE | 31-10-1989 | NYGREN P.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)